# EUROPÄISCHE PATENTSCHRIFT

(11) **EP 0 678 890 B1**
(45) Veröffentlichungstag und Bekanntmachung des Hinweises auf die Patenterteilung: **24.06.1998**
(21) Anmeldenummer: 94106336.4
(22) Anmeldetag: 22.04.1994
(51) Int. Cl.: H01H 71/04

(54) **Verfahren zur Zustandserkennung an Leitungsschutzschaltern und zugehörige Anordnung**
Method and device for detecting the state of automatic cut-outs
Méthode et dispositif pour la détection de l'état des disjoncteurs de ligne

(43) Veröffentlichungstag der Anmeldung: 25.10.1995
(73) Patentinhaber: SIEMENS AKTIENGESELLSCHAFT, 80333 München (DE)
(72) Erfinder: Maier, Reinhard, Dr. Dipl.-Ing., D-91074 Herzogenaurach (DE); Trautmann, Bernd, Dipl.-Ing., D-91056 Erlangen (DE)

(56) Entgegenhaltungen:
- EP-A- 0 434 338
- EP-A- 0 579 912
- DD-A- 124 556
- US-A- 3 806 682

## Beschreibung

Die Erfindung bezieht sich auf eine Anordnung aus einem Schaltgerät mit einem Schaltgerätegehause und diesem zugeordneten Mitteln zur Zustandserkennung des Schaltgerätes durch Bestimmung der elektrischen Kapazität zwischen leitfähigen Teilen des Schaltgerätegehäuses und den Innenleitern des Schaltgerätes mit Schaltkontakten. Eine derartige Anordnung ist aus der US-A-3 806 682 bekannt, wobei als leitfähiges Teil des Schaltgerätegehäuses eine dort bereits vorhandene metallische Führungshülse für die Schalterbetätigung verwendet wird.

Bei letzterer Anordnung ist das Schaltgerät ein gasisolierter Hochspannungsschalter, wobei die kapazitive Signalerfassung aufgrund der hohen Spannungen im Hochspannungsschalter möglich ist. Für mit niedrigen Spannungen arbeitende Schaltgeräte sind derartige Anordnungen nicht ohne weiteres realisierbar.

Speziell für die Gebäudesystemtechnik sind Schutzsysteme notwendig. Bei solchen Systemen soll beispielsweise der Schaltzustand eines Leitungsschutzschalters detektiert werden und über ein Bussystem weiter gemeldet werden können. Nebenbedingung ist dabei, daß keine Eingriffe in das geschlossene Schaltergehäuse vorgenommen werden.

Es wurde bereits vorgeschlagen, für bestimme Leitungsschutzschalter Zusatzhilfsschalter vorzusehen, die mechanisch an den eigentlichen Schutzschalter angekoppelt sind. Mit solchen Hilfsschaltern soll der Zustand des Hauptleitungsschutzschalters erkannt werden. Ein derartiges System ist beispielsweise aus der EP-A-0 434 338 bekannt, mit der mechanisch/elektrische Komponenten über einen Hilfsstromkreis die Schaltzustande erfassen.

Aufgabe der Erfindung ist es demgegenüber, eine verbesserte Zustandserkennung an Leitungsschutzschaltern zu realisieren.

Die Aufgabe ist erfindungsgemäß dadurch gelöst, daß bei einer Anordnung der eingangs genannten Art das Schaltgerät ein Leitungsschutzschalter ist, dem ein separates Gehäuse mit wenigstens einem Meßkondensator zugeordnet ist, so daß vom Meßkondensator und der Kapazität zu den Innenleitern des Leitungsschutzschalters ein kapazitiver Spannungsteiler gebildet wird. Vorzugsweise ist das Gehäuse neben dem Leitungsschutzschalter auf einer Befestigungsschiene für das Schaltgerätegehause aufschnappbar. Dabei sind vorteilhafterweise im separaten Gehäuse weiterhin eine Auswerteschaltung und ein Busankopplungsstein vorhanden.

Mit der Erfindung ist in einfacher Weise erreicht, daß keine Eingriffe in das Gehäuse des Leitungsschutzschalters notwendig sind. Es läßt sich in einfacher Weise erkennen, ob der Abgang des Leitungsschutzschalters an Spannung liegt oder nicht. Weiterhin kann damit bei Anordnung des Meßkondensators in der Nähe des beweglichen Ankers dessen Abweichung von der Ruhelage erkannt werden, der sich gegebenenfalls durch Kurzschluß oder Überlast ergibt. Durch Auswertung der so erkannten Signalzustände, insbesondere durch Auswertung deren zeitlicher Aufeinanderfolge, ist es möglich, die Ursache einer Ausschaltung festzustellen.

Weitere Einzelheiten und Vorteile der Erfindung ergeben sich aus der nachfolgenden Figurenbeschreibung von Ausführungsbeispielen anhand der Zeichnung. Es zeigen
Figur 1 ein Schaltbild der neuen Anordnung und
Figur 2 den zugehörigen Lageplan.

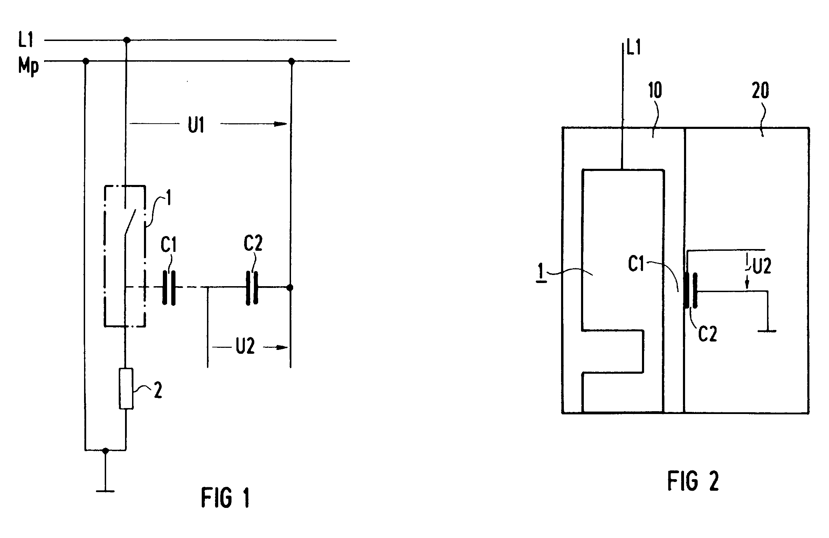

In Figur 1 kennzeichnet C1 die Kapazität eines im Leitungsschutzschalter 1 befindlichen Leiters zur Meßfläche eines Meßkondensators C2. Es ist also ein kapazitiver Spannungsteiler mit den Kapazitäten C1 und C2 gebildet. Die sich mit dieser Anordnung ergebenden Spannungen des Spannungsteilers sind mit U1 und U2 bezeichnet.

Statt der Anordnung als Spannungsteiler ist es auch möglich, eine elektrisch leitende Platte direkt außen an dem Leitungsschutzschalter 1 derart anzubringen, daß mit dem Leiter im Inneren die Kapazität C1 gebildet wird. Gegebenenfalls kommen dafür Beschichtungen des Schaltergehäuses aus leitfähigem Material in Frage.

In Figur 2 ist der Leitungsschutzschalter 1 aus Figur 1 mit den zugehörigen leitenden Teilen in einer Gehäuseeinheit 10 angeordnet. Außen ist der Kondensator C2 angebracht, dessen eine Platte in definierter Position zum Leiter L1 liegt und damit die Kapazität C1 bildet. In Figur 2 ist für den Kondensator C2 eine separate Gehäuseeinheit 20 vorgesehen. Dabei liegt die eine Seite von C2 an MP oder Erde.

Bei der Anordnung gemäß Figur 1 bzw. Figur 2 sind keine Eingriffe in das Gehäuse 10 mit dem Leitungsschutzschalter 1 notwendig. Mit dem beschriebenen Aufbau können unterschiedliche Zustände im Leitungsschutzschalter überprüft werden:

Bei einer Anordnung gemäß Figur 1 bzw. Figur 2 wurde ein Plattenkondensator mit einer Kapazität C2 = 47 pF und eine verdrillte Meßleitung von 50 cm Länge gewählt. Durch Anordnung eines solchermaßen dimensionierten Meßkondensators bei der Abgangsseite des Leitungsschutzschalters 1 ließen sich mit einem elektronischen Wechselspannungsmeßgerät folgende Spannungen messen:
- Schalter 1 offen: U₂ = 0,2 V
- Schalter 1 geschlossen: U₂ = 2 V
Damit kann also anhand der Meßspannung U_{M} festgestellt werden, ob der Eingang des Leitungsschutzschalters an Spannung liegt oder nicht.

Bei gleicher Dimensionierung des Meßkondensators wurde dieser in die Nähe des beweglichen Ankers des Leitungsschutzschalters 1 gebracht und mit dem elektronischen Wechselspannungsmeßgerät in Abhängigkeit von der Abweichung der Ruhelage gemessen. Es ergaben sich folgende Werte:
- Anker in Ruhelage: U₂ = 348 mV
- Anker angezogen: U₂ = 337 mV.

Es kann somit sogar eine Abweichung des Ankers von der Ruhelage infolge Kurzschluß oder Überlast detektiert werden. Durch die zeitliche Aufeinanderfolge beider vorstehend beschriebener Maßnahmen und Auswertung der dabei erkannten Signalzustände ist also möglich, die Ursache einer Ausschaltung des Leitungsschutzschalters 1 festzustellen.

Die beschriebene Anordnung ist in einfacher Weise in die Gebäudesystemtechnik integrierbar. Dafür können der Meßkondensator einschließlich der zugehörigen Auswerteschaltung und einem gegebenenfalls vorhandenen Busankopplungsbaustein in das separate Gehäuse 20 gemäß Figur 2 integriert werden, wobei das Gehäuse 20 unmittelbar neben einem Leitungsschutzschalter auf die Befestigungsschiene aufgeschnappbar ist. Um störende Einflüsse der Meßleitungen auszuschalten, wird der Meßkondensator C2 vorteilhafterweise direkt an einem geeigneten Operationsverstärker angeschlossen. Das so verstärke Meßsignal kann einem Schwellwertschalter zugeführt und mit einem voreingestellten Wert verglichen und dann der weiteren Auswertung zugeführt werden.

Speziell das durch letztere Maßnahme elektronisch gewonnene Signal ist auch direkt einem bereits vorhandenen Ankoppelbaustein eines Gebaude-Bussystems zugeführbar. Somit ist eine unmittelbare Komplettierung bestehender Systeme möglich.

Durch Einzelmaßnahmen und Verbesserung der in den Figuren 1 und 2 nur prinzipiell dargestellten Systeme können sich weitere Verbesserungen ergeben: Insbesondere wird durch Anordnung einer geerdeten Fläche um den Meßkondensator C2 das Verhältnis von Nutz-/Störsignal verbessert. Speziell für die Positionserkennung beweglicher Teile, wie beispielsweise des bereits erwähnten Ankers, ist eine Differenzmessung zwischen mehreren Meßkondensatoren vorteilhaft. Die örtliche Auflösung kann dabei durch die Verkleinerung der Fläche einzelner Meßkondensatoren gesteigert werden.

Sofern im Leitungsschutzschalter Löschbleche vorhanden sind, kann durch Anbringung eines Meßkondenators in der Nähe eines vorbestimmten Löschbleches das Einlaufen des Lichtbogens in die Löschbleche durch den damit verbundenen Spannungssprung erfaßt werden, da jeweils ein Spannungssprung auftritt.

Bei den vorstehend angegebenen Maßnahmen wurde jeweils der eigentliche Leitungsschutzschalter in vorhandener Form vorausgesetzt. Durch spezielle Ausformung der leitenden Teile eines Leitungsschutzschalters oder auch durch die Anbringung von leitfähigen Fahnen kann die Fläche der Kapazität C1 vergrößert bzw. optimiert werden. Durch derartige konstruktive Anpassungen von Leitungsschutzschaltern können weitere Verbesserungen zu deren Zustandserkennung realisiert werden.

## Patentansprüche

1. Anordnung aus einem Schaltgerät mit einem Schaltgerätegehäuse (10) und diesem zugeordneten Mitteln zur Zustandserkennung des Schaltgerätes durch Bestimmung der elektrischen Kapazität (C1) zwischen leitfähigen Teilen des Schaltgerätegehäuses (10) und den Innenleitern des Schaltgerätes mit Schaltkontakten, **dadurch gekennzeichnet,** daß das Schaltgerät ein Leitungsschutzschalter (1) ist, dem ein separates Gehäuse (20) mit wenigstens einem Meßkondensator (C2) zugeordnet ist, so daß vom Meßkondensator (C2) und der Kapazität (C1) zu den Innenleitern des Leitungsschutzschalters (1) ein kapazitiver Spannungsteiler gebildet wird.

2. Anordnung nach Anspruch 1, **dadurch gekennzeichnet**, daß das Gehäuse (20) neben dem Leitungschutzschalter (1) auf einer Befestigungsschiene für das Schaltgerätegehause aufschnappbar ist.

3. Anordnung nach Anspruch 1, **dadurch gekennzeichnet,** daß im separaten Gehäuse (20) eine Auswerteschaltung vorhanden ist.

4. Anordnung nach Anspruch 1, **dadurch gekennzeichnet,** daß im separaten Gehäuse (20) ein Ankoppelbaustein für ein Gebäudebussystem vorhanden ist.

5. Anordnung nach Anspruch 1, **dadurch gekennzeichnet**, daß der Meßkondensator (C2) an einen Operationsverstärker angeschaltet ist.

6. Anordnung nach Anspruch 5, **dadurch gekennzeichnet,** daß dem Operationsverstärker ein Schwellwertschalter zugeordnet ist, in dem das verstärkte Meßsignal mit einem einstellbaren Wert verglichen wird.

7. Anordnung nach Anspruch 1, **dadurch gekennzeichnet**, daß der Meßkondensator (C2) in der Nähe eines Löschbleches des Leitungsschutzschalters (1) angeordnet ist.

8. Anordnung nach Anspruch 7, **dadurch gekennzeichnet,** daß leitende Teile des Leitungsschutzschalters (1) derart ausgeformt sind, daß die interne Kapazität optimiert ist.

9. Anordnung nach Anspruch 7 oder Anspruch 8, **gekennzeichnet** durch die Anbringung von zusätzlichen leitfähigen Fahnen zur Vergrößerung der internen Kapazität.

## Claims

1. Arrangement comprising a switching device with a switching device housing (10) and means allocated thereto for the state detection of the switching device by determining the electrical capacitance (C1) between conductive parts of the switching device housing (10) and the inner conductors of the switching device with switching contacts, characterized in that the switching device is a circuit breaker (1) which is allocated a separate housing (20) with at least one measuring capacitor (C2), so that a capacitive voltage divider is formed from the measuring capacitor (C2) and the capacitance (C1) for the inner conductors of the circuit breaker (1).

2. Arrangement according to claim 1, characterized in that the housing (20) next to the circuit breaker (1) can be snapped on to a fastening rail for the switching device housing.

3. Arrangement according to claim 1, characterized in that there is an evaluation circuit in the separate housing (20).

4. Arrangement according to claim 1, characterized in that there is a coupling module for a building bus system in the separate housing (20).

5. Arrangement according to claim 1, characterized in that the measuring capacitor (C2) is connected to an operational amplifier.

6. Arrangement according to claim 5, characterized in that a threshold value switch is allocated to the operational amplifier, in which threshold value switch the amplified measuring signal is compared with an adjustable value.

7. Arrangement according to claim 1, characterized in that the measuring capacitor (C2) is arranged in the vicinity of an extinguishing plate of the circuit breaker (1).

8. Arrangement according to claim 7, characterized in that conducting parts of the circuit breaker (1) are shaped in such a way that the internal capacitance is optimized.

9. Arrangement according to claim 7 or claim 8, characterized by the fitting of additional conductive lugs in order to increase the internal capacitance.

## Revendications

1. Dispositif constitué d'un appareil de coupure comportant un boîtier (10) d'appareil de coupure et des moyens qui y sont associés pour identifier l'état de l'appareil de coupure en déterminant la capacité (C1) électrique entre des pièces conductrices du boîtier (10) de l'appareil de coupure et les conducteurs intérieurs de l'appareil de coupure comportant des contacts de coupure, caractérisé en ce que l'appareil de coupure est un disjoncteur (1) de protection de ligne auquel est associé un boîtier (20) distinct comportant au moins un condensateur (C2) de mesure, si bien qu'il est formé un diviseur de tension capacitif du condensateur (C2) de mesure et de la capacité (C1) au conducteur intérieur du disjoncteur (1) de protection de ligne.

2. Dispositif suivant la revendication 1, caractérisé en ce que le boîtier (20) peut être encliqueté à côté du disjoncteur (1) de protection de ligne, sur un rail de fixation destiné au boîtier de l'appareil de coupure.

3. Dispositif suivant la revendication 1, caractérisé en ce qu'il est présent un circuit d'exploitation dans le boîtier (20) séparé.

4. Dispositif suivant la revendication 1, caractérisé en ce qu'il est présent dans le boîtier (20) séparé un module de raccordement pour un système de bus de bâtiment.

5. Dispositif suivant la revendication 1, caractérisé en ce que le condensateur (C2) de mesure est raccordé à un amplificateur opérationnel.

6. Dispositif suivant la revendication 5, caractérisé en ce qu'il est associé à l'amplificateur opérationnel un interrupteur à valeur seuil, dans lequel le signal de mesure amplifié est comparé à une valeur réglable.

7. Dispositif suivant la revendication 1, caractérisé en ce que le condensateur (C2) de mesure est monté à proximité d'une tôle d'extinction du disjoncteur (1) de protection de ligne.

8. Dispositif suivant la revendication 7, caractérisé en ce que des pièces conductrices du disjoncteur (1) de protection de ligne sont conformées de manière à optimiser la capacité interne.

9. Dispositif suivant la revendication 7 ou la revendication 8, caractérisé par le montage de pattes conductrices supplémentaires pour augmenter la capacité interne.
